# FASCICULE DE BREVET EUROPEEN

(11) **EP 1 945 405 B1**
(45) Date de publication et mention de la délivrance du brevet: **18.11.2009**
(21) Numéro de dépôt: 06808312.0
(22) Date de dépôt: 12.09.2006
(51) Int. Cl.: B23Q 17/22, B23Q 16/00

(54) **PROCEDE ET DISPOSITIF DE REGLAGE DE LA PROFONDEUR D'EMMANCHEMENT D'UN OUTIL DANS UN PORTE-OUTIL**
VERFAHREN UND VORRICHTUNG ZUR EINSTELLUNG DER EINPASSTIEFE EINES WERKZEUGS IN EINEM WERKZEUGHALTER
METHOD AND DEVICE FOR ADJUSTING THE FITTING DEPTH OF A TOOL IN A TOOL-HOLDER

(30) Priorité: 13.09.2005 FR 0509339
(43) Date de publication de la demande: 23.07.2008
(73) Titulaire: SECO - E.P.B., 67330 Bouxwiller (FR)
(72) Inventeur: FREYERMUTH, Alain, F-67350 Pfaffenhoffen (FR)
(74) Mandataire: Nuss, Laurent
(86) Numéro de dépôt international: PCT/FR2006/050874
(87) Numéro de publication internationale: WO 2007/031682

(56) Documents cités:
- EP-A- 0 556 611
- DE-A1- 10 317 574
- US-A1- 2001 042 295
- US-A1- 2004 080 089

## Description

La présente invention concerne le domaine de l'environnement des machines-outils, en particulier des machines à commande numérique, des centres d'usinage, des machines ou ligne transfert, pour l'usinage à grande vitesse ou pour lesquelles des grandes précisions dimensionnelles et de concentricité sont requis, notamment des dispositifs d'assemblage et de désassemblage d'outils dans le porte-outils par dilatation thermique; et a pour objet un procédé de réglage de la profondeur d'emmanchement d'un outil dans un porte-outil, en particulier dans un porte-outil à fretter.

L'invention a également pour objet dispositif pour la mise en oeuvre de ce procédé.

Il existe actuellement différents dispositifs permettant d'assembler par frettage un outil dans le porte-outil. (voir, par exemple, DE-103-17 574-A). Ces dispositifs de frettage d'ensembles porte-outils - outils, avec intervention manuelle ou automatisé pour l'emmanchement, ne permettent, cependant, pas la prise de mesure ou la mise en position précise et le contrôle de la position d'un outil, ce qui, dans le contexte d'utilisation industrielle et de préparation d'outil actuels, devient indispensable.

On connaît également des machines de préréglage, encore appelées bancs de préréglage ou de mesure permettant de mesurer un outil, mais ces bancs sont autonomes et ne sont généralement pas adaptés à un frettage d'outils dans des porte-outils. Par conséquent il est nécessaire de manipuler les ensembles porte-outils - outils plusieurs fois pour accéder aux informations nécessaires à la bonne connaissance desdits ensembles.

En effet, l'utilisateur doit disposer d'informations relatives à la profondeur d'emmanchement d'un outil dans un porte-outils, dimension qui est généralement parfaitement prédéterminée et qui doit être respectée pour permettre une utilisation optimale et sûre d'un outil. Or, la profondeur d'emmanchement d'un outil dans un porte-outil est fonction d'un réglage préalable d'une butée du porte-outil, réglage qui ne peut être effectué lors d'un frettage.

Du fait que dans le cas de mandrins à fretter, le diamètre du porte-outil est plus faible que celui de l'outil, il est impossible de régler ce dernier avant de procéder au frottage. De même, il est important de connaître la profondeur d'emmanchement, du fait que le couple transmissible à l'outil est directement lié à ladite profondeur d'emmanchement.

La présente invention a pour but de pallier les inconvénients des dispositifs connus à ce jour en proposant un procédé de réglage de la profondeur d'emmanchement d'un outil dans un porte-outil, en particulier dans un porte-outil à fretter et un dispositif pour la mise en oeuvre de ce procédé permettant de régler de manière précise et reproductible une profondeur d'emmanchement et de vérifier ladite profondeur.

A cet effet, le procédé de réglage de la profondeur d'emmanchement d'un outil dans un porte-outil, en particulier dans un porte-outil à fretter, est caractérisé en ce qu'il consiste à réaliser un étalonnage préalable d'un ensemble de palpage par positionnement d'un coulisseau de palpage de cet ensemble dans un alésage d'un support d'étalonnage et par mise à zéro d'un moyen de visualisation dudit ensemble de palpage, puis à positionner l'ensemble de palpage au-dessus d'un porte-outil et à déplacer la butée réglable de ce porte-outil en direction du coulisseau de palpage, afin de déterminer une course de ce dernier correspondant à la profondeur d'emmanchement requise.

L'invention a également pour objet un dispositif pour la mise en oeuvre de ce procédé selon la revendication 2.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation frontale et en coupe du dispositif pour la mise en oeuvre du procédé conforme à l'invention ;
la figure 2 est une vue en élévation latérale du dispositif suivant la figure 1, sans le support d'étalonnage, et
la figure 3 est une vue, à plus grande échelle, analogue à celle de la figure 1, représentant le réglage de la longueur d'un ensemble de coupe avant vérification de la profondeur d'emmanchement d'un outil.

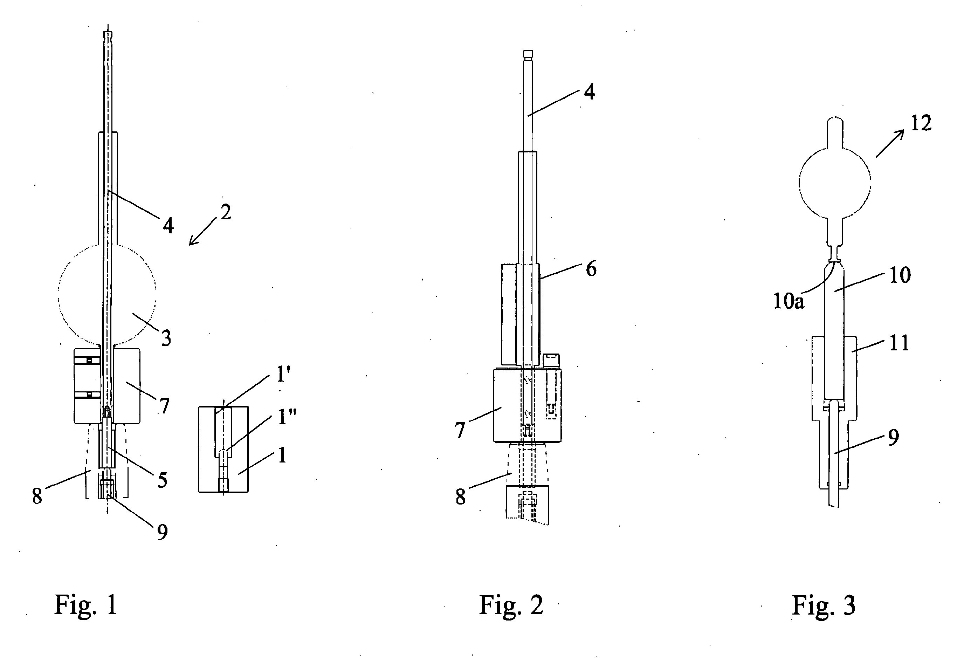

Les figures 1 et 2 des dessins annexés représentent, à titre d'exemple, un dispositif de réglage de la profondeur d'emmanchement d'un outil dans un porte-outil.

Conformément à l'invention, ce dispositif comporte un support d'étalonnage 1, un ensemble de palpage 2 comprenant un corps 3, dans lequel coulisse un coulisseau de palpage 4 coopérant avec un moyen de visualisation 6, et une bague de butée 7 fixée sur le corps 3.

Selon l'invention, ce dispositif est destiné à la mise en oeuvre d'un procédé de réglage de la profondeur d'emmanchement d'un outil dans un porte-outil, en particulier dans un porte-outil à fretter, consistant à réaliser un étalonnage préalable d'un ensemble de palpage 2 par positionnement d'un coulisseau de palpage 4 de cet ensemble 2 dans un alésage 1' d'un support d'étalonnage 1 et par mise à zéro d'un moyen de visualisation 6 dudit ensemble de palpage 2, puis à positionner l'ensemble de palpage au-dessus d'un porte-outil 8 et à déplacer la butée réglable 9 de ce porte-outil en direction du coulisseau de palpage 4, afin de déterminer une course de ce dernier correspondant à la profondeur d'emmanchement requise.

De préférence, et comme représenté aux figures 1 et 2 des dessins annexés, le coulisseau de palpage 4 est pourvu d'une touche de palpage 5 interchangeable.

Selon une caractéristique de l'invention, le support d'étalonnage 1 se présente préférentiellement sous forme d'un manchon muni d'un alésage borgne 1', dans le fond duquel est monté une touche ajustable 1 ". Ainsi, par action sur la touche ajustable 1", il est possible de régler parfaitement une profondeur d'enfoncement d'une tige ou analogue introduite dans l'alésage 1' et en particulier de la touche de palpage 5 ou directement de l'extrémité du coulisseau de palpage 4.

Dans le mode de réalisation représenté aux dessins annexés, le coulisseau 4 est muni d'une touche de palpage 5, avantageusement montée à l'extrémité libre du coulisseau de palpage 4 traversant la bague de butée 7. A cet effet, le dispositif peut être pourvu de plusieurs touches de palpage 5 interchangeables de longueurs différentes. Ainsi, il est possible d'effectuer des vérifications de profondeur d'emmanchement de différentes longueurs par simple adaptation de la touche de palpage correspondante. Bien entendu, dans un tel cas, il sera nécessaire de prévoir, soit une importante course de réglage de la touche ajustable 1" du support d'étalonnage 1, soit des supports d'étalonnage de différentes hauteurs présentant des alésages 1' de profondeurs différentes. Il est ainsi possible d'utiliser le dispositif conforme à l'invention pour réaliser le réglage de la profondeur de pénétration d'outils à queue de fixation de longueurs différentes dans des porte-outils de dimensions différentes, en particulier de longueurs d'emmanchement différentes.

La liaison entre l'extrémité du coulisseau de palpage 4 débouchant dans le corps de butée 7 et la touche de palpage 5 est avantageusement réalisée sous forme d'une liaison par vissage, par déformation élastique, ou analogue, la touche de palpage 5 étant pourvue d'un épaulement venant en appui contre l'extrémité du coulisseau de palpage 4 dans la position de service de ladite touche de palpage 5.

Le coulisseau de palpage 4, qui présente une forme de tige, coopère avantageusement avec le moyen de visualisation 6 de l'ensemble de palpage 2, soit par l'intermédiaire d'un moyen mécanique entraînant un dispositif d'affichage à aiguille, par exemple par une liaison à crémaillère et à pignon, soit par l'intermédiaire d'un dispositif de détection de déplacement par mesure électrique ou électronique coopérant avec un dispositif d'affichage digital. Ces liaisons entre le coulisseau de palpage 4 et le moyen de visualisation 6 sont connus de l'homme du métier et ne nécessitent pas d'être décrits plus en détail.

Le dispositif conforme à l'invention fonctionne avantageusement de la manière suivante :

Après réglage de position de la touche ajustable 1" dans le fond de l'alésage 1' du support d'étalonnage 1, en vue de déterminer une profondeur d'enfoncement parfaitement définie dans ledit alésage 1', l'ensemble de palpage 2 avec la touche de palpage 5 montée à l'extrémité du coulisseau de palpage 4 est déplacé au-dessus du support d'étalonnage 1 et appuyé sur ce dernier par la face correspondante du corps de butée 7, la touche de palpage 5 pénétrant dans l'alésage 1' pour venir en butée sur la touche ajustable 1" du support d'étalonnage 1.

Lors de cet appui de l'ensemble de palpage 2 sur le support d'étalonnage 1, il se produit, lors de l'arrivée en butée du corps de butée 7 sur le support d'étalonnage 1 et de l'arrivée en butée de la touche de palpage 5 sur la touche ajustable 1 ", un déplacement de ladite touche de palpage 5 en direction du corps 3 de l'ensemble de palpage 2, ce qui a pour effet d'entraîner le coulisseau de palpage 4 sur une certaine longueur, ce déplacement s'affichant sur le moyen de visualisation 6.

L'étalonnage de l'ensemble de palpage 2 est alors réalisé par une mise à zéro du moyen d'affichage 6 ou par affectation de ce moyen d'affichage 6 d'une valeur de consigne prédéterminée.

La détermination d'une profondeur d'emmanchement d'un outil dans un porte-outil s'effectue, après avoir mesuré la longueur totale de l'outil, par soustraction de la longueur de sortie ou consigne désirée de ce dernier de la longueur totale dudit outil.

Lorsque cette valeur est établie, le réglage de la profondeur d'emmanchement d'un outil dans un porte-outil 8 est alors effectué par positionnement de l'ensemble de palpage 2 au-dessus dudit porte-outil 8 et application de la surface correspondante du corps de butée 7 sur la face avant du porte-outil 8. Le coulisseau de palpage pénètre alors, par l'intermédiaire de la touche de palpage 5 dans l'alésage correspondant du porte-outil 8, jusqu'à entrer en contact avec la butée réglable 9 de ce dernier.

Par lecture de la valeur indiquée sur le moyen d'affichage 6 de l'ensemble de palpage 2, il est alors possible de déterminer la profondeur d'enfoncement existante dans l'alésage dudit porte-outil 8, puis d'ajuster celle-ci par déplacement de la butée réglable 9 du porte-outil 8 en direction du coulisseau de palpage 4, jusqu'à atteinte de la profondeur d'emmanchement requise.

L'ensemble de palpage 2 peut alors être escamoté et, par exemple, être rangé sur le support d'étalonnage 1.

Après ce réglage, le porte-outil 8 peut être monté dans un dispositif de frettage d'outils, dans lequel l'outil correspondant au réglage prédéterminé pourra être monté de manière précise.

Le dispositif conforme à l'invention permet également de vérifier une profondeur d'emmanchement d'un outil 10 dans un porte-outil dont la butée est préréglée (figure 3). A cet effet, le porte-outil est remplacé par une douille entretoise 11, qui est emmanchée sur la butée 9 et loge, du côté opposé à ladite butée 9, l'outil 10.

Par mise en oeuvre d'un moyen de palpage 12, de type connu, s'appliquant sur l'extrémité libre 10a de l'outil 10, il est possible de régler la longueur de l'ensemble de coupe constituée par un outil 10, par une butée réglable 9 et par un porte-outil, non représenté, remplaçant la douille entretoise 11.

Après ce réglage, et retrait de l'outil 10 et de la douille entretoise 11, un porte-outil est mis en place sur la butée réglable 9 en remplacement de la douille 11. Il est alors possible de vérifier, en utilisant l'ensemble de palpage conforme à l'invention et selon les figures 1 et 2, la profondeur d'emmanchement de l'outil 10 et de la comparer aux valeurs de consigne définies pour garantir un bon fonctionnement d'un ensemble de coupe.

Un tel réglage est nécessaire lorsqu'une longueur prédéfinie de valeur active d'outil est exigée. En effet, dans un tel cas, il convient de pouvoir vérifier que la longueur d'emmanchement de l'outil dans le porte-outil est encore suffisante pour satisfaire aux exigences de bon fonctionnement.

Grâce à l'invention, il est possible de réaliser un dispositif de réglage de la profondeur d'emmanchement d'un outil dans un porte-outil, en particulier dans un porte-outil à fretter permettant, par mise en oeuvre d'un procédé simple, d'effectuer un réglage parfaitement précis et reproductible de porte-outils en vue du montage d'outils de coupe.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention qui est défini par les revendications ci-jointes.

## Revendications

1. Procédé de réglage de la profondeur d'emmanchement d'un outil dans un porte-outil, en particulier dans un porte-outil à fretter, **caractérisé en ce qu'**il consiste à réaliser un étalonnage préalable d'un ensemble de palpage (2) par positionnement d'un coulisseau de palpage (4) de cet ensemble (2) dans un alésage (1') d'un support d'étalonnage (1) et par mise à zéro d'un moyen de visualisation (6) dudit ensemble de palpage (2), puis à positionner l'ensemble de palpage au-dessus d'un porte-outil (8) et à déplacer la butée réglable (9) de ce porte-outil en direction du coulisseau de palpage (4), afin de déterminer une course de ce dernier correspondant à la profondeur d'emmanchement requise.

2. Dispositif pour la mise en oeuvre du procédé, suivant la revendication 1, **caractérisé en ce qu'**il comporte un support d'étalonnage (1), un ensemble de palpage (2) comprenant un corps (3), dans lequel coulisse un coulisseau de palpage (4), coopérant avec un moyen de visualisation (6) et pourvu d'une touche de palpage (5) interchangeable, et une bague de butée (7) fixée sur le corps (3).

3. Dispositif, suivant la revendication 2, **caractérisé en ce que** le support d'étalonnage (1) se présente sous forme d'un manchon muni d'un alésage borgne (1'), dans le fond duquel est monté une touche ajustable (1").

4. Dispositif, suivant la revendication 2, **caractérisé en ce qu'**il est pourvu de plusieurs touches de palpage (5) interchangeables de longueurs différentes.

5. Dispositif, suivant la revendication 2, **caractérisé en ce qu'**il est pourvu de plusieurs supports d'étalonnage de différentes hauteurs présentant des alésages (1') de profondeurs différentes.

6. Dispositif, suivant la revendication 2, **caractérisé en ce que** la liaison entre l'extrémité du coulisseau de palpage (4) débouchant dans le corps de butée (7) et la touche de palpage (5) est réalisée sous forme d'une liaison par vissage, par déformation élastique, ou analogue, la touche de palpage (5) étant pourvue d'un épaulement venant en appui contre l'extrémité du coulisseau de palpage (4) dans la position de service de ladite touche de palpage (5).

7. Dispositif, suivant la revendication 2, **caractérisé en ce que** le coulisseau de palpage (4), qui présente une forme de tige, coopère avec le moyen de visualisation (6) de l'ensemble de palpage (2), soit par l'intermédiaire d'un moyen mécanique entraînant un dispositif d'affichage à aiguille, par exemple par une liaison à crémaillère et à pignon, soit par l'intermédiaire d'un dispositif de détection de déplacement par mesure électrique ou électronique coopérant avec un dispositif d'affichage digital.

## Claims

1. Method of regulating the fitting depth of a tool in a tool-holder, in particular in a shrink tool-holder, **characterised in that** it consists of performing a preliminary adjustment of a sensing assembly (2) by positioning a sensing slide (4) of this assembly (2) into a bore (1') of an adjustment support (1) and by putting at zero a visualisation means (6) of said sensing assembly (2), then positioning the sensing assembly above a tool holder (8) and displacing the adjustable stop (9) of this tool holder in the direction of the sensing slide (4) in order to determine a course of the latter corresponding to the required fitting depth.

2. Device for implementing the method according to claim 1, **characterised in that** it comprises an adjustment support (1), a sensing assembly (2) comprising a body (3), in which a sensing slide (4) slides, cooperating with a visualisation means (6) and provided with an interchangeable sensing button (5) and a stop ring (7) fixed onto the body (3).

3. Device according to claim 2, **characterised in that** the adjustment support (1) is in the form of a sleeve provided with a blind bore (1') in the base of which an adjustable button (1") is mounted.

4. Device according to claim 2, **characterised in that** several interchangeable sensing buttons (5) are provided of different lengths.

5. Device according to claim 2, **characterised in that** several adjustment supports of different heights are provided with bores (1') of different depths.

6. Device according to claim 2, **characterised in that** the connection between the end of the sensing slide (4) opening into the stop body (7) and the sensing button (5) is designed in the form of a screw connection, by elastic deformation or the like, the sensing button (5) being provided with a shoulder bearing against the end of the sensing slide (4) into the position of service of said sensing button (5).

7. Device according to claim 2, **characterised in that** the sensing slide (4), which is in the form of a rod, cooperates with the visualisation means (6) of the sensing assembly (2), either by means of a mechanical device drawing a needle display device, for example by means of a rack-and-pinion connection or by means of a device for detecting displacement by electric or electronic means cooperating with a digital display device.

## Patentansprüche

1. Verfahren zur Einstellung der Einpasstiefe eines Werkzeugs in einem Werkzeughalter, insbesondere in einem Werkzeughalter zum Aufschrumpfen,
**dadurch gekennzeichnet, dass**
dieses Folgendes umfasst:
Vorabmessung mehrerer Formabtastungen in einem Bereich (2) durch Positionierung eines Tastschiebers (4) für diesen Tastbereich (2) in einer Bohrung (1') eines Messhalters (1) und durch Nullpunktbestimmung eines Visualisierungsmittels (6) des Tastbereiches (2), nachfolgende Positionierung des Tastbereiches (2) über einem Werkzeughalter (8) und Verschiebung des verstellbaren Begrenzers (9) des Werkzeughalters in Richtung des Tastschiebers (4), um eine Distanz entsprechend der erforderlichen Einpasstiefe für diesen zu bestimmen.

2. Vorrichtung zur Umsetzung des Verfahrens nach Anspruch 1,
**dadurch gekennzeichnet, dass**
diese Folgendes umfasst:
einen Messhalter (1), einen Tastbereich (2) mit einem Hauptkörper (3), in dem ein Tastschieber (4) verschoben wird, der in Wirkverbindung mit einem Visualisierungsmittel (6) steht und mit einem austauschbaren Formabtaster (5) und einer Anschlagshülse (7) ausgestattet ist, die an dem Hauptkörper (3) befestigt ist.

3. Vorrichtung nach Anspruch 2,
**dadurch gekennzeichnet, dass**
der Messhalter (1) die Form einer Hülse aufweist, die mit einer Blindbohrung (1') versehen ist, in deren Boden ein einstellbarer Taster (1 ") befestigt ist.

4. Vorrichtung nach Anspruch 2,
**dadurch gekennzeichnet, dass**
diese mit mehreren austauschbaren Formabtastern (5) in unterschiedlichen Längen ausgestattet ist.

5. Vorrichtung nach Anspruch 2,
**dadurch gekennzeichnet, dass**
diese mit mehreren Messhaltem in verschiedenen Höhen ausgestattet ist, die Bohrungen (1') in verschiedenen Tiefen aufweisen.

6. Vorrichtung nach Anspruch 2,
**dadurch gekennzeichnet, dass**
die Verbindung zwischen dem Endbereich des Tastschiebers (4), der in den Anschlagskörper (7) eingeschoben wird, und dem Formabtaster (5) durch eine Schraubverbindung oder durch elastische Verformung realisiert wird oder der Formabtaster (5) entsprechend mit einem Anschlag ausgestattet ist, der sich gegen den Endbereich des Tastschiebers (4) in Betriebsstellung des Formabtasters (5) drückt.

7. Vorrichtung nach Anspruch 2,
**dadurch gekennzeichnet, dass**
der Tastschieber (4), der die Form eines Stabes aufweist, in Wirkverbindung mit dem Visualisierungsmittel (6) des Tastbereiches (2) steht, und zwar entweder über ein mechanisches Mittel, das eine Anzeigevorrichtung mit Zeigernadel steuert, wie zum Beispiel eine Verbindung durch Zahnstangen und Zahnrad oder über eine elektrische oder elektronische Vorrichtung zur Bewegungserkennung, die mit einer digitalen Anzeigevorrichtung verbunden ist.
